# EUROPEAN PATENT SPECIFICATION

(11) **EP 1 227 609 B1**
(45) Date of publication and mention of the grant of the patent: **11.10.2006**
(21) Application number: 01116746.7
(22) Date of filing: 19.07.2001
(51) Int. Cl.: H04J 3/24, H04Q 11/04

(54) **Apparatus and method for data multiplexing**
Verfahren und Vorrichtung zum Multiplexen von Daten
Procédé et dispositif de multiplexage de données

(30) Priority: 26.01.2001 JP 2001018645
(43) Date of publication of application: 31.07.2002
(73) Proprietor: FUJITSU LIMITED, Kawasaki-shi, Kanagawa 211-8588 (JP)
(72) Inventor: Takagi, Yoshinobu, Kawasaki-shi, Kanagawa 211-8588 (JP); Morita, Hirotaka, Kawasaki-shi, Kanagawa 211-8588 (JP); Komatsu, Chiyoko, Kawasaki-shi, Kanagawa 211-8588 (JP); Miyashita, Takuya, Kawasaki-shi, Kanagawa 211-8588 (JP); Taniguchi, Atsuki, Kawasaki-shi, Kanagawa 211-8588 (JP)
(74) Representative: HOFFMANN EITLE

(56) References cited:
- WO-A-01/20947
- DE-A1- 19 903 366
- US-A- 5 280 479
- US-A- 5 499 238
- US-A- 5 991 812
- SHAOWEN SONG: "Multiprocessor parallel routing for the quality of service enabled internet" PARALLEL COMPUTING IN ELECTRICAL ENGINEERING, 2000. PARELEC 2000. PROCEEDINGS. INTERNATIONAL CONFERENCE ON 27-30 AUGUST 2000, PISCATAWAY, NJ, USA,IEEE, 27 August 2000 (2000-08-27), pages 160-164, XP010513806 ISBN: 0-7695-0759-X
- MANCHESTER J ET AL: "IP OVER SONET" IEEE COMMUNICATIONS MAGAZINE, IEEE SERVICE CENTER. PISCATAWAY, N.J, US, vol. 36, no. 5, May 1998 (1998-05), pages 136-142, XP000752858 ISSN: 0163-6804
- PATENT ABSTRACTS OF JAPAN vol. 1998, no. 10, 31 August 1998 (1998-08-31) & JP 10 145367 A (NEC ENG LTD), 29 May 1998 (1998-05-29)

## Description

The present invention generally relates to a data transmission method and a transmission apparatus using the same, and more particularly to a data transmission method and a transmission apparatus in a network.

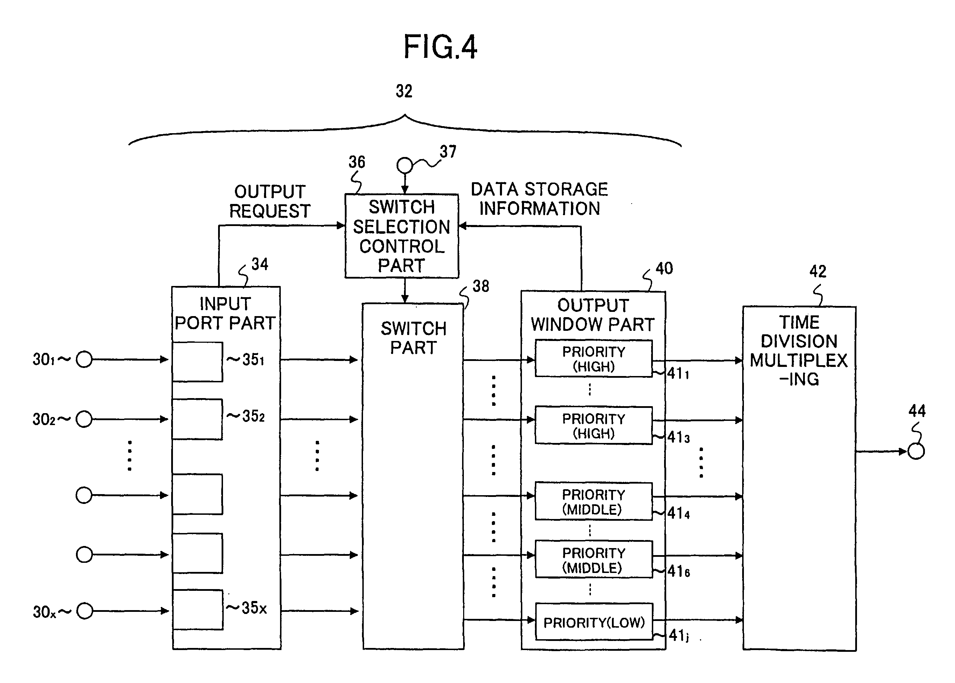

Paper XP 10513806 ("Multiprocessor Parallel Routing for Quality of Service Enabled Internet"; Shaowen Sang; IEEE Parallel Computing in Electrical Engineering, 2000, Paralec Proceedings 27/8/2000, pages 160-164 ISBN 0-7695-0759-X) relates to a parallel router and a packet switching mechanism by merging IPv6 and the Asynchronous Transfer Mode (ATM) for connectionless non-realtime communication applications and providing the Quality of Service (QoS) for realtime applications. The IPv6 packet and ATM cell co-routing/switch mechanism are developed for a parallel router and presented along with parallel hardware architecture. Fig 4 depicts the architecture of a network interface which consists of two groups of incoming buffers and one outgoing buffer. In each group of buffers, there are three incoming data buffers, with the first one for realtime Constant Bit Rate applications, the second for realtime Variable Bit Rate applications, and the third for non-realtime communications. Multiplexed outgoing data is sent out using outgoing time slots. The two groups of buffers allow data to be moved concurrently without requiring memory address arbitrations.

US Patent US 5, 499,238 discloses an asynchronous transfer mode (ATM) multiplexing process device and method of the broadband integrated service digital network subscriber across apparatus. The device comprises a QoS class buffering means for storing the ATM cell data input from a cell identification means, respectively, according to the class, and for outputting buffer state information, and a scheduling control means for outputting connection establishment information and QoS class information to the cell identification means, and for outputting all operation information of the ATM multiplexing process device and input traffic information, after receiving the input traffic information from the cell identification means, the buffer state information from the QoS class buffering means, and a QoS parameter. The device can be applied to a transmission device requiring statistical cell multiplexing and can be used for a broadband integrated service digital network requiring high speed.

A broadband cellular phone has stimulated new services and businesses along with the progress of DSL (Digital Subscriber Line) and FTTH (Fiber to the Home). A transmission network that supports these new technologies is required to be able to handle a broader range.

A transmission network constructed by a 10 Gbps transmission apparatus has been placed in practice. These transmission apparatuses employ WDM (Wavelength Division Multiplexing). However, an advanced transmission apparatus capable of operating at 40 Gbps is required to realize an increased transmission capacity. In addition, the speedup of LAN (Local Area Network) may require a LAN interface to be integrated into the transmission apparatus.

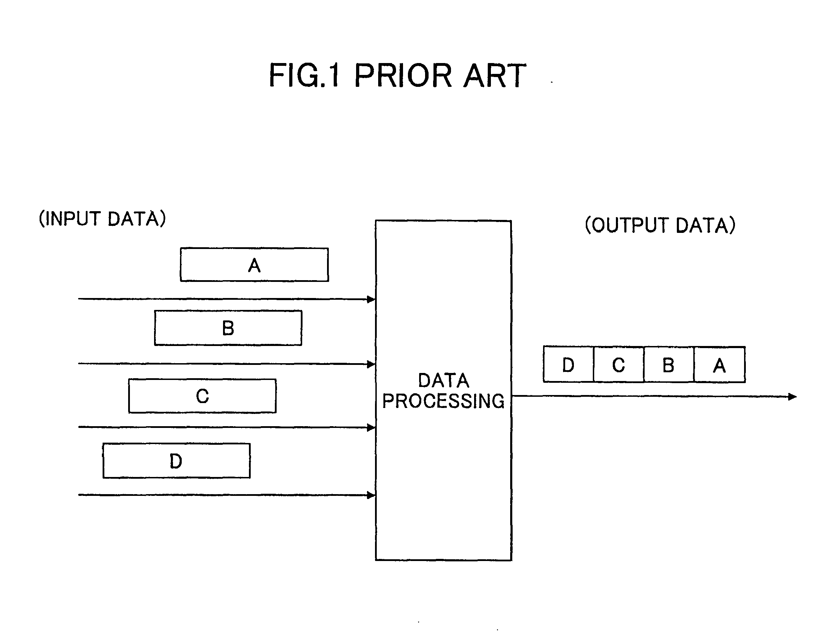

Referring to Fig. 1, a conventional transmission system buffers input data A, B, C and D in a given sequence and multiplexes these items of data so that multiplexed data can be sent to a transmission line. If the buffering of input data A - D is completed without congestion, data can be sequentially sent to the transmission line.

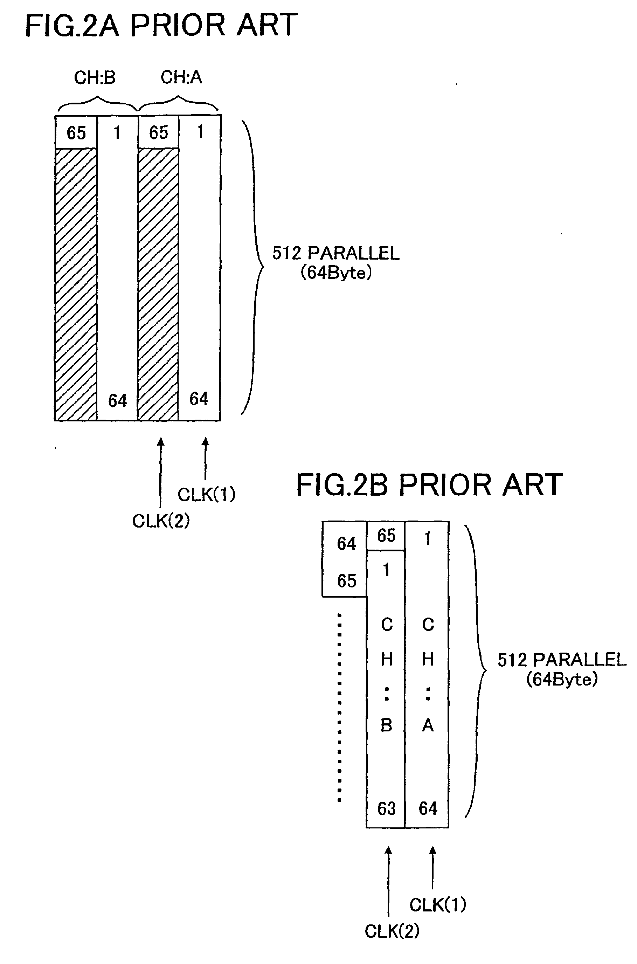

Let us consider a semiconductor integrated circuit that forms the above-mentioned transmission apparatus processes 512 bits (64 bytes) in parallel. For example, if a packet of 65 bytes is applied to the semiconductor integrated circuit, the first 64 bytes are processed by a first clock CLK(1), as shown in Fig. 2A, and only the remaining one byte is processed by a second clock CLK(2), while the 63 bytes indicated by hatching are meaningless blank data. In order to avoid the occurrence of meaningless data, as shown in Fig. 2B, the boundary between the consecutive packets is identified, and the head position in the 512 parallel data must be changed. Simultaneously, the preceding packet and the head of the following packet must be processed by the same clock. It follows that very complex processing rather than the simple parallel processing is required to cope with the above situation.

Turning to Fig. 1 again, if a large amount of data has been stored in the buffer used for buffering input data A, the buffering of input data may be delayed or the buffer may overflow so that input data A may be partially or completely discarded. If such a problem occurs, some data may be lost on the reception side or may arrive with different times. Such a situation would considerably degrade the quality of service, particularly, for data required to be processed in real time, such as voice data and moving picture data. As is known, HTTP (Hyper Text Transfer Protocol) and FTP (File Transfer Protocol) used in the Internet requests retransmission of discarded data, so that the responsibility is degraded.

There is another problem. Let us consider that a large amount of data has been stored in the buffer used for buffering data A while a small amount of data has been stored in the buffer used for buffering data B. Even when data B is applied to the associated buffer after data A is applied to the associated buffer, data B may be output from the buffer in advance of data A. This changes the transmission order of data A and B. If this problem occurs, some data may be lost on the reception side or a difference in arrival time may occur. The above situation would degrade the quality of service, particularly for data required to be processed in real time, such as voice data or moving picture data.

In the case of Fig. 2A, a meaningless area may occur in the buffer built in the semiconductor integrated circuit and may cause delay of processing in the integrated circuit. If it is attempted to seek the boundary between the consecutive packets, a complex process is required to pick up the head part of data. Process complexity would increase delay caused in the semiconductor integrated circuit.

It is a general object of the present invention to overcome the above-mentioned problems.

A more specific object of the present invention is to provide a data transmission method and an apparatus using the same such as a router, in which the possibility of discarding data due to delay or overflow in buffers that receive input data can be reduced and the possibility that the transmission order may be changed can be reduced and in which occurrence of a meaningless buffer area can be avoided and delay of processing can be reduced by a simple process.

According to a first aspect of the present invention, there is provided a data transmission method comprising the steps of: controlling switches that connect an input port part having a plurality of input ports to an output buffer part having a plurality of buffers in accordance with data storage states of the plurality of buffers; storing data from the plurality of input ports into a buffer that is not currently used for writing and has an available area, said buffer being included in the plurality of buffers; and multiplexing the data read from the buffers in time division multiplexing for transmission.

According to a second aspect of the present invention, there is provided a transmission apparatus comprising: an input port part having a plurality of input ports; an output buffer part having a plurality of buffers; a switch part adapted to make connections between the plurality of input ports and the plurality of buffers; a selection control circuit adapted to control the switch part so that data from the plurality of input ports are stored in a buffer that is not currently used for writing and has an available area among the plurality of buffers in accordance with data storage states of the plurality of buffers; and a time division multiplexing part adapted to multiplex the data read from the plurality of buffers in time division multiplexing for transmission.

The above aspects make it possible to reduce the possibility that input data may be discarded due to a delay or overflow in buffering and to reduce the possibility that data of a plurality of systems may be transmitted in an order different from the original order. The data is caused to be stored in a buffer having a sufficient available area, so that there is no need to detect the head part of the data and the buffers can be used efficiently. Therefore, a complex process is not needed so that delay can be reduced.

There may further be provided a transmission apparatus wherein: the output buffer part includes a plurality of buffers for each of priorities; and the selection control circuit is adapted to control the switch part to cause the data from the plurality of input ports to be stored in a buffer which is included in the plurality of buffers and is not currently used for writing and has an available area in accordance with storage states of the plurality of buffers for each of the priorities. Therefore, it is possible to reduce the possibility that input data with priority allocated may be discarded due to a delay or overflow in buffering and to reduce the possibility that data of a plurality of systems may be transmitted in an order different from the original order based on the priority. The data is caused to be stored in a buffer having a sufficient available area, so that there is no need to detect the head part of the data and the buffers can be used efficiently. Therefore, a complex process is not needed so that delay can be reduced.

There may further be provided a transmission apparatus wherein: the output buffer part includes a plurality of buffers for each of data types; and the selection control circuit is adapted to control the switch part to cause the data from the plurality of input ports to be stored in a buffer which is included in the plurality of buffers and is not currently used for writing and has an available area in accordance with storage states of the plurality of buffers for each of the data types. Therefore, it is possible to reduce the possibility that input data may be discarded due to delay or overflow in buffering of a different data type and reduce the possibility that various types of data may be transmitted in an order different from the original order.

There may still further be provided a transmission apparatus wherein: the output buffer part includes a plurality of buffers for each of priorities and each of data types; and the selection control circuit is adapted to control the switch part to cause the data from the plurality of input ports to be stored in a buffer which is included in the plurality of buffers and is not currently used for writing and has an available area in accordance with storage states of the plurality of buffers for each of the priorities and each of the data types. Therefore, it is possible to reduce the possibility that input data may be discarded due to delay or overflow in buffering based on the data type and priority and to reduce the possibility that various types of data based on the priority may be transmitted in an order different from the original order.

There may further be provided a transmission apparatus wherein: the input port part comprises label add parts which are adapted to add labels to the plurality of input ports. Therefore, it is possible to determine via which port data should be output by using the label added to each data item.

There may yet further be provided a transmission apparatus wherein: the output buffer part comprises SONET frame assembly parts which are adapted to assemble data read from the plurality of buffers into respective SONET frames and to then supply the SONET frames to the time division multiplexing part. This allows the present invention transmission apparatus to coexist in the outstanding SONET network.

There may further be provided a transmission apparatus wherein: the output buffer part comprises simple SONET frame assembly parts which are adapted to assemble data read from the plurality of buffers into respective SONET frames and to then supply the SONET frames to the time division multiplexing part. Thus, the regular pointer process is no longer needed and the process can be simplified. When a fixed pointer value is used, the process may be performed in the same manner as that of the SONET.

There may further be provided a transmission apparatus comprising an 8B/10B conversion part that is adapted to convert multiplexed data from the time division multiplexing part into data having an 8B/10B conversion format for transmission. Hence, there is no need to assemble the frames and use scrambling, so that the process can be simplified.

There may further be provided a transmission apparatus comprising MAC delete/label add parts that are adapted to delete MAC addresses from IP packets and add labels corresponding to the plurality of input ports to IP packets that are the data input to the input port part. Hence, it is possible to reduce the IP packet length and improve the transmission efficiency. Communications between the transmission apparatuses of the present invention take place without an address resolution protocol (ARP).

There may yet further be provided a transmission apparatus comprising label detection parts that are adapted to detect labels added to a plurality of items of data obtained by subjecting a received signal to demultiplexing in a second time division multiplexing part; a plurality of second buffers that are adapted to store the plurality of items of data; a second switch part that is adapted to make connections between a plurality of second buffers and a plurality of output ports; and a second selection control circuit that is adapted to control the second switch part so that the plurality of items of data can be output via the output ports dependent on the labels detected. It is therefore possible to determine via which port data should be output by using the labels added to the data.

For a better understanding of the present invention, and to show how the same may be carried into effect, reference will now be made, by way of example to the following drawings, in which:
Fig. 1 is a diagram illustrating a conventional data transmission system;
Fig. 2 is a block diagram illustrating a conventional technique and a problem thereof to be solved by the invention;
Fig. 3 is a block diagram of a transmission apparatus on a transmission side according to a first embodiment of the present invention;
Fig. 4 is a block diagram of a transmission apparatus on a transmission side according to a second embodiment of the present invention;
Figs. 5A and 5B are diagrams of IP packet formats;
Fig. 6 is a flowchart of an input process executed by an input port part shown in Fig. 4;
Fig. 7 is a flowchart of a selection control process executed by a switch selection control part shown in Fig. 4;
Fig. 8 is a block diagram of a transmission apparatus on a transmission side according to a third embodiment of the present invention;
Fig. 9 is a flowchart of an input process executed by an input port part shown in Fig. 8;
Fig. 10 is a flowchart of a selection control process executed by a switch selection control part shown in Fig. 8;
Fig. 11 is a block diagram of a transmission apparatus on a transmission side according to a fourth embodiment of the present invention;
Fig. 12 is a flowchart of an input process executed by an input port shown in Fig. 11;
Fig. 13 is a flowchart of a selection control process executed by a switch selection control part shown in Fig. 11;
Fig. 14 is a block diagram of a transmission apparatus on a transmission side according to a fifth embodiment of the present invention;
Fig. 15 is a block diagram of a transmission apparatus on a reception side according to a sixth embodiment of the present invention;
Fig. 16 is a block diagram of a transmission apparatus on a transmission side according to a seventh embodiment of the present invention;
Fig. 17 is a block diagram of a transmission apparatus on a reception side according to an eighth embodiment of the present invention;
Fig. 18 is a block diagram of a transmission apparatus on a transmission side according to a ninth embodiment of the present invention;
Fig. 19 is a block diagram of a transmission apparatus on a reception side according to a tenth embodiment of the present invention;
Fig. 20 is a block diagram of a transmission apparatus on a transmission side according to an eleventh embodiment of the present invention;
Figs. 21A through 21D are diagrams illustrating deletion of MAC address; and
Fig. 22 is a block diagram of a transmission apparatus on a transmission side according to a twelfth embodiment of the present invention.

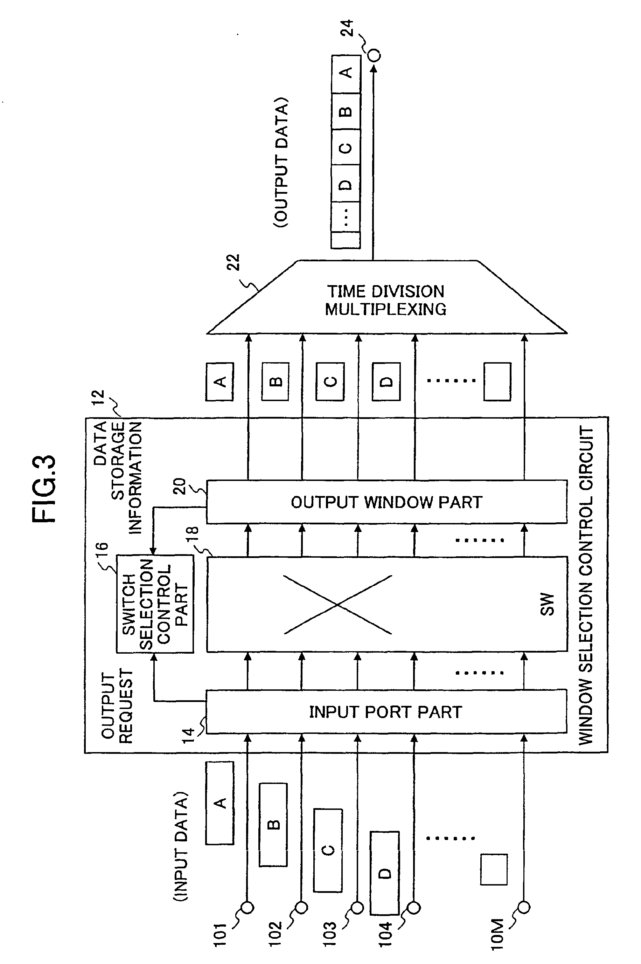

Fig. 3 is a block diagram of a transmission apparatus on the transmission side according to a first embodiment of the present invention. Serial data of M systems are applied to terminals 10₁ through 10_{M} (M is an integer and is, for example, 16), which terminals are accommodated by an input port part 14 provided in a window selection control circuit 12. The serial data may, for example, be SONET-OC48 signals of 2.5 Gbps, in which SONET-OC48 means that Synchronous Optical Network Optical Carrier level 48. The window selection control circuit 12 is made up of the input port part 14, a switch selection control part 16, a switch part 18 and an output window part 20.

The input port part 14 receives input data via the terminals 10₁ through 10_{M} and supplies the input data to the switch part 18. Further, the input port part 14 notifies the switch selection control part 16 of an output request to which any of the terminal numbers of the 10₁ through 10_{M} is added. The output window part 20 includes m buffers (m is an integer and is, for example, 16), and notifies the switch selection control part 16 of data storage information about each buffer. Each buffer includes a S/P converter (serial-to-parallel), which converts serial data into parallel data.

The switch selection control part 16 receives the output request, and selects a buffer from among the buffers, the selected buffer being not currently used for writing and the largest available area. Then, the switch selection control part 16 controls the switch part 18 to make a connection between the terminal of the number added to the output request (any of the terminals 10₁ - 10_{M}) and the selected buffer in the output window part 20.

Thus, data that are input to the terminals 10₁ - 10_{M} are distributed to the buffers that function as the appropriate output windows of the output window part 20, and are stored therein. Data are written into and read from the m buffers of the output window part 20 in first-in first-out (FIFO) formation, and are supplied to a time division multiplexing part 22. This part 22 multiplexes data supplied from the m buffers in time division multiplexing formation, resultant data being serially output via a terminal 24.

As described above, the m buffers are provided in the output window part 20, and input data is stored in one of the buffers having the largest available area by referring to the data storage information concerning the buffers. This makes it possible to reduce the possibility that input data may be destroyed due to delay or overflow in buffering and to reduce the possibility that the order of transmission of data in different transmission systems may be changed.

Fig. 4 is a block diagram of a transmission apparatus on the transmission side according to a second embodiment of the present invention. Serial data of X systems are applied to the terminals 30₁ through 30_{X} (where X is an integer and is, for example, 40), and are supplied to an input port part 34 provided in a window selection control circuit 32. This circuit 32 is made up of an input port part 34, a switch selection control part 36, a switch part 38 and an output window part 40. The serial data are, for example, 1 Gbps signals.

The input port part 34 includes label add parts 35₁ through 35_{X}, which are associated with the terminals 30₁ through 30_{X}. The label add parts 35₁ through 35_{X} add the identification numbers of the terminals 30₁ through 30ₓ to IP packets that are input via the terminals 30₁ through 30_{X} as serial data. The IP packets with the identification numbers added are then supplied to the switch part 38. Further, the input port part 34 drops QoS (Quality of Service) from header information of the input IP packets, and notifies the switch selection control part 36 of an output request with the dropped QoS and the terminal number added to each input IP packet.

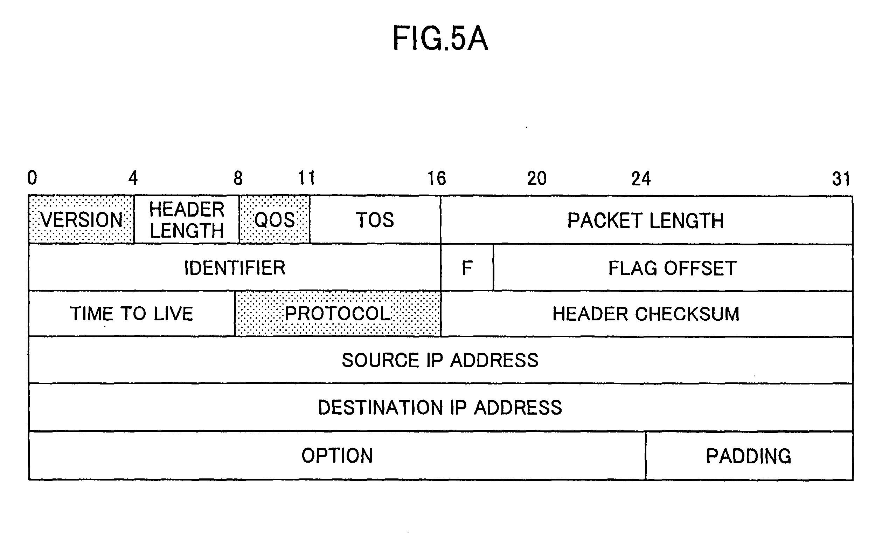

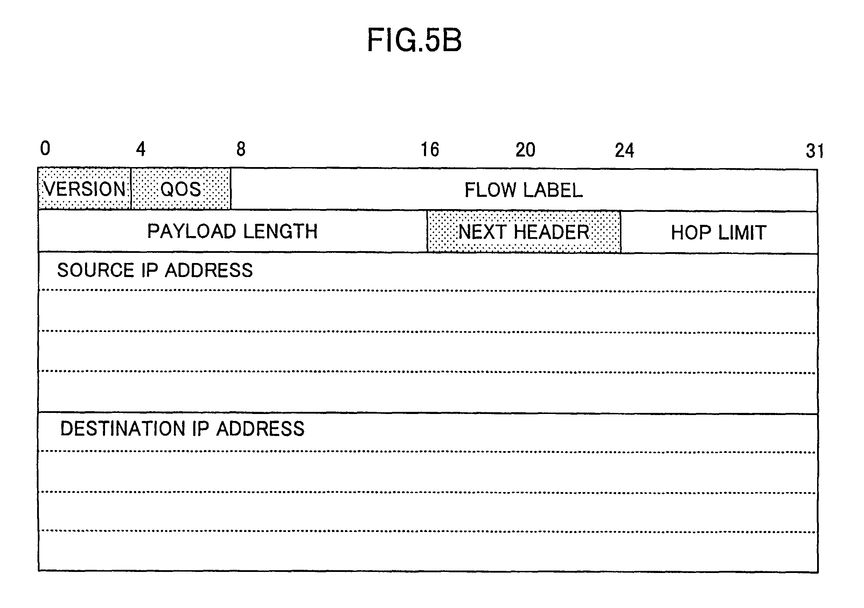

The IP packets may have a format shown in Fig. 5A in IPv4 (Internet Protocol version 4). In this format, QoS is set in the eighth through eleventh bits of the first octet of the header. In IPv6 shown in Fig. 5B, QoS is set in the fourth through seventh bits of the first octet of the header. The label added to each IP packet indicates the terminal numbers of the terminals 30₁ through 30_{X} by, for example, one byte, and is used to designate the output port at the reception-side apparatus in the transmission destination.

The output window part 40 includes j buffers 41₁ through 41ⱼ (j is, for example, 9). The buffers 41₁ through 41₃ are used for comparatively high priority. The buffers 41₄ through 41₆ are used for comparatively middle priority. The buffers 41₇ through 41ⱼ are used for comparatively low priority. The output window part 40 informs the switch selection control part 36 with data storage information concerning each of the buffers 41₁ through 41ⱼ, which includes a respective S/P converter converting input serial data into parallel data.

The switch selection control part 36 includes a priority table in which priority levels corresponding to the QoS values are defined. For example, comparatively low priority is defined for QoS values of 0 - 3, and comparatively middle priority is defined for QoS values of 4 and 5. Further, comparatively high priority is defined for QoS values of 6 and 7. The contents of the priority table can be rewritten by an upper-order apparatus connected to the switch selection control part 36 via a terminal 37.

Upon receipt of an output request from the input port part 34, the switch selection control part 36 refers to the priority table by the QoS value added to the output request and obtains the priority level from the priority table. If the IP packet is assigned high priority, the switch selection control part 36 checks the data storage information concerning the buffers 41₁ - 41₃. If the IP packet is assigned middle priority, the switch selection control part 36 checks the data storage information concerning the buffers 41₄ - 41₆. If the IP packet is assigned low priority, the switch selection control part 36 checks the data storage information concerning the buffers 41₇ - 41ⱼ. Then, the switch selection control part 36 selects one of the candidate buffers which is not currently subject to writing and the comparatively largest available area. Then, the switch selection control part 36 controls the switch part 38 so as to make a connection between the terminal (one of the terminals 30₁ - 30_{X}) having the terminal number added to the output request and the selected buffer in the output window part 40.

In the above manner, the IP packets input to the terminals 30₁ - 30_{X} are distributed to the j buffers in the output window part 40 in accordance with the priority levels added to the IP packets, and are stored in the selected buffers. The buffers of the output window part 40 may be FIFO buffers. The IP packets read out of the buffers are then supplied to a time-division multiplexing part 42 shown in Fig. 4. An output signal of the time-division multiplexing part 42 is, for example, SONET-OC768 of 40 Gbps.

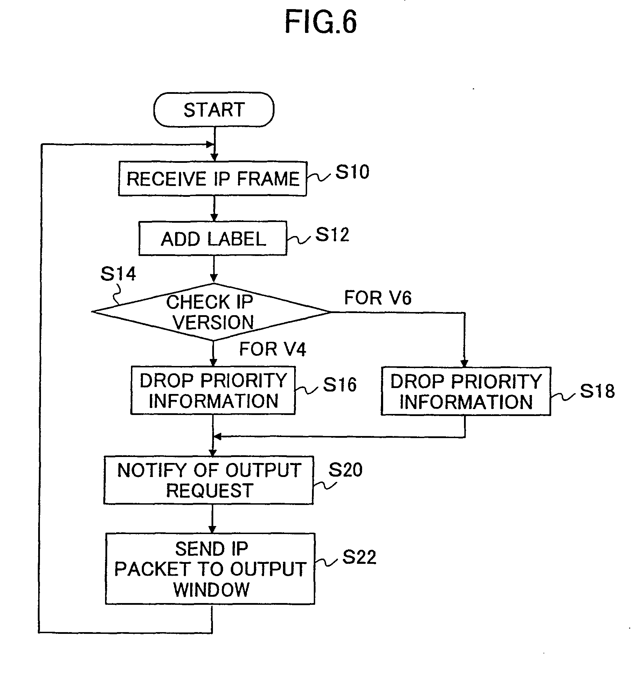

Fig. 6 is a flowchart of an input process executed by the input port part 34. At step S10, an IP packet is received via one of the terminals 30₁ - 30_{X}. At step S12, the label of the terminal number of the terminal to which the IP packet is input is added to the IPpacket. At step S14, it is determined whether the received IP packet has the format of IPv4 or IPv6.

If the received IP packet has the IPv4 format, the QoS is dropped from the ninth through eleventh bits of the first octet of the header of the IP packet at step S16. If the received IP packet has the IPv6 format, the QoS is dropped from the fifth through eighth bits of the first octet of the header of the IP packet at step S18. At step S20, the switch selection control part 36 is notified of the output request with the terminal number and QoS added thereto. At step S22, the IP packet with the label added is sent to the switch part 38. Then, the process returns to step S10, and the sequence of steps S10 - S22 is repeated.

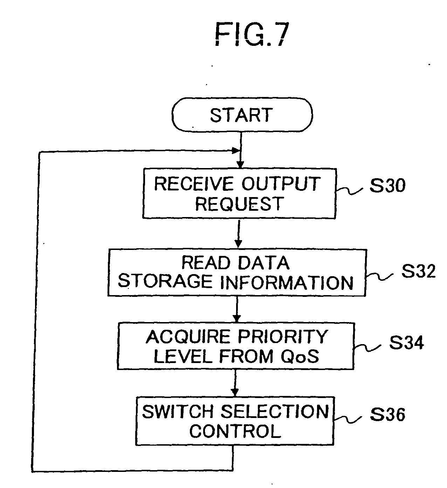

Fig. 7 is a flowchart of a selection control process executed by the switch selection control part 36. At step S30, the output request is received via the input port part 34. At step S32, the data storage information concerning the buffers 41₁ - 41ⱼ from the output window part 40 is read. At step S34, the priority table is referred to by the QoS value added to the output request, and the priority level is acquired therefrom. Then, one of the buffers having the priority level acquired is selected so that the selected buffer is not currently subject to writing and has the largest available area. At step S36, the switch part 38 is controlled so as to make a connection between the terminal of the terminal number added to the output request and the selected buffer in the output window part 40. Then, the process returns to step S30, and the sequence of steps S30 - S36 is repeatedly executed.

As described above, a plurality of buffers are assigned for each of the different priority levels in the output window part 40, and the input IP packet is stored in the selected buffer that is one of the buffers having the priority level corresponding to the QoS value of the input IP packet and has the largest available area. It is therefore possible to reduce the possibility that input IP packets may be discarded due to delay or overflow in buffering and to reduce the possibility that the order of data transmission may be changed.

By the way, the Internet signal is a burst signal, which is transferred between computers in "best effort" formation. The "best effort" does not ensure even whether a packet is expected to arrive. On the contrary, recently, a stream signal has come into widespread use. The stream signal is used to, for example, deliver images or video or implement Internet phone. Particularly, the video delivery is required to have a capability of continuously sending a reliable signal having little delay fluctuation for a long time.

The stream signal, particularly, the video delivery signal continues to be transferred over the network for a long time without a large capacity change. Even when the bit stream signal of a capacity close to the tolerable level is allowed to be transferred, there is no possibility that packets may be discarded. In contrast, the burst signal inherently has a very large change in the capacity. If normal traffic level is set very high, packets may be discarded due to an abrupt capacity change as if a floodgate is opened. Therefore, it is essential to transmit the burst signal at a reduced efficiency level.

In the aforementioned embodiments of the present invention, a plurality of queues with the same priority level assigned are provided so as to enable a plurality of input signals to be handled at the same priority level. If a plurality of signals having the same priority level are received at almost the same time, these signals may be output at slightly different times so that a signal slightly leads to or lags behind the other signals. This is a fluctuation of the signal delay time. An increased fluctuation will occur if a signal having the low priority level contains a large amount of data. A third embodiment of the present invention described below is directed to eliminating the above-mentioned problems.

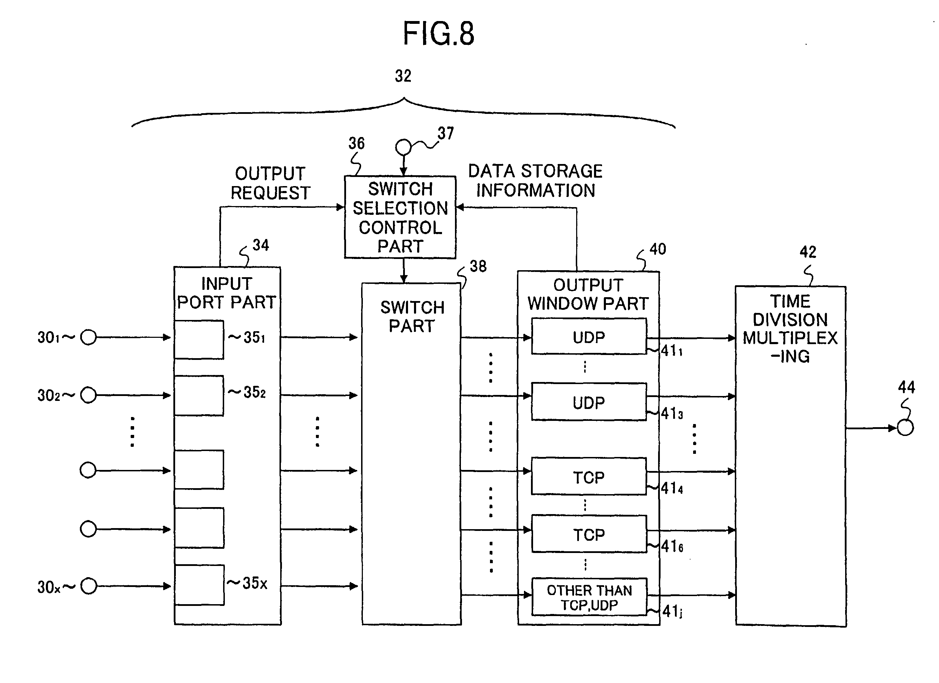

Fig. 8 is a block diagram of a transmission apparatus on the transmission side according to a third embodiment of the present invention. In Fig. 8, parts that are the same as those shown in Fig. 4 are given the same reference numerals. Serial data of the X (X is, for example, 40) system are applied to the terminals 30₁ through 30_{X}, and is supplied to an input port part 45 of the window selection control circuit 32. This circuit 32 includes the input port part 45 and a switch selection control part 46 in addition to the aforementioned switch part 38 and output window part 40. The serial data may, for example, a 1 Gbps signal.

The input port part 45 includes the label add parts 35₁ through 35_{X} associated with the terminals 30₁ through 30_{X}, respectively. The label add parts 35₁ through 35_{X} add, as labels, the terminal numbers of the terminals 30₁ through 30_{X} to the IP packets supplied as serial data. The IP packets with the labels added thereto are supplied to the switch part 38. Further, the input port part 45 drops the protocol or the next header from the header information of the input IP packets, and notifies the switch selection control part 46 of the output request with the dropped protocol or next header and the terminal number.

The IP packets that conform to the IPv4 have the format shown in Fig. 5A, in which the protocol of the transport layer is set in the eighth through fifteenth bits of the third octet of the header. The protocol has a value of "06" in the hexadecimal notation for TCP (Transmission Control Protocol), and has a value of "17" in the hexadecimal notation for UDP (User Datagram Protocol). The IP packets that conform to the IPv6 have the format shown in Fig. 5B, in which the next header is set in the sixteenth through twenty-third bits of the second octet of the header. The next header indicates "06" in the hexadecimal notation for TCP and "17" in the hexadecimal notation for UDP. The label added to the IP packet consists of one byte and indicates the terminal number of the corresponding one of the terminals 30₁ through 30_{X}. The label is used to designate the output port at the reception-side apparatus that is the transmission designation.

The output window part 40 includes j buffers 41₁ through 41ⱼ (j is, for example, 9). The buffers 41₁ through 41₃ are used for UPD, the buffers 41₄ through 41₆ for TCP, and buffers 41₇ through 41ⱼ for an application other than UDP and TCP. The output window part 40 notifies the switch selection control part 46 of data storage information about each buffer. Each buffer includes a S/P converter.

The switch selection control part 46 includes a data type table, which includes information dependent on data type information represented by the protocol or the next header. For instance, the table defines the UDP application for the protocol or the next header value of "17", TCP application for the value of "06", and an application other than the UDP and TCP applications for a numeral value other than "17" and "06". The contents of the data type table can be rewritten by an upper-order apparatus connected via a terminal 47.

Upon receipt of an output request from the input port part 45, the switch selection control part 46 refers to the data type table by the data type information (the value of the protocol or next header) added to the output request in order to obtain information about application. The control part 46 checks the data storage information about the buffers 411 -413, 414 - 416 and 417 - 41j for IP packets of UDP, TCP and FTP applications, respectively. Then, the control part 46 selects one of the candidate buffers which is not currently subject to writing and the comparatively largest available area. Then, the switch selection control part 46 controls the switch part 38 so as to make a connection between the terminal (one of the terminals 30₁ - 30_{X}) having the terminal number added to the output request and the selected buffer in the output window part 40.

In the above manner, the IP packets input to the terminals 30₁ - 30_{X} are distributed to the j buffers in the output window part 40 in accordance with the data type information, and are stored in the selected buffers. The buffers of the output window part 40 may be FIFO buffers. The IP packets read out of the buffers are then supplied to the time-division multiplexing part 42. The output signal of the time-division multiplexing part 42 is, for example, SONET-OC768 of 40 Gbps.

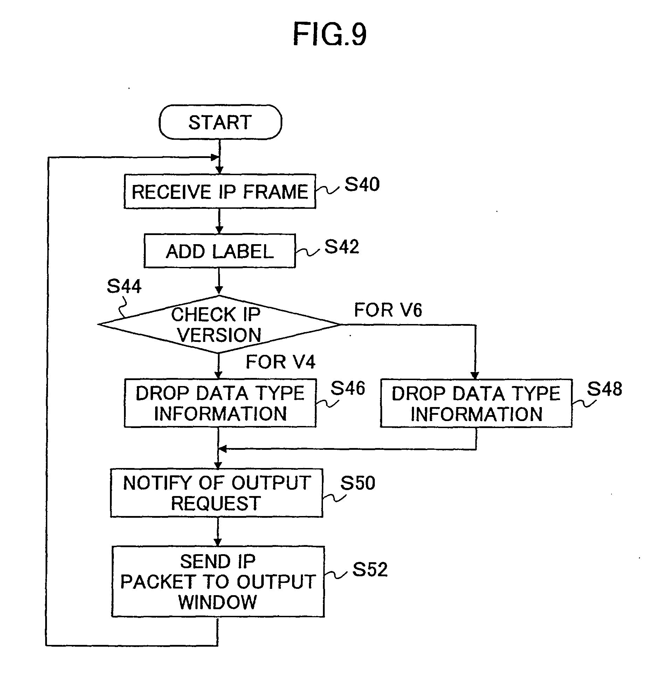

Fig. 9 is a flowchart of an input process executed by the input port part 45. At step S40, an IP packet is received via one of the terminals 30₁ - 30_{X}. At step S42, the label of the terminal number of the terminal to which the IP packet is input is added to the IP packet. At step S44, it is determined whether the received IP packet has the format of IPv4 or IPv6.

If the received IP packet has the IPv4 format, the data type information (protocol) is dropped from the header of the IP packet at step S46. If the received IP packet has the IPv6 format, the data type information (next header) is dropped from the header of the IP packet at step S18. At step S50, the switch selection control part 46 is notified of the output request with the terminal number and the data type information added thereto. At step S52, the IP packet with the label added is sent to the switch part 38. Then, the process returns to step S40, and the sequence of steps S40 - S52 is repeated.

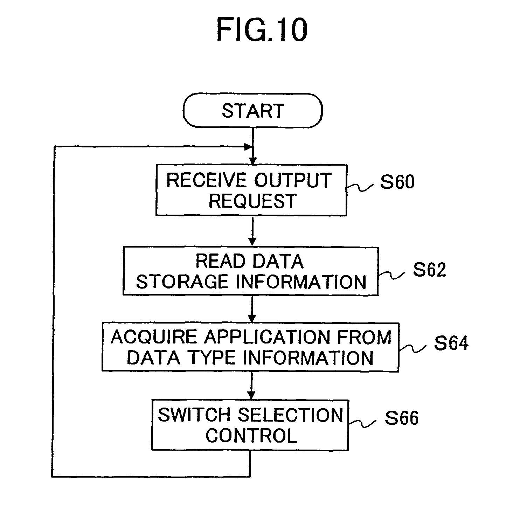

Fig. 10 is a flowchart of a selection control process executed by the switch selection control part 46. At step S60, the output request is received via the input port part 45. At step S62, the data storage information concerning the buffers 41₁ - 41ⱼ from the output window part 40 is read. At step S64, the data type table is referred to by the data type information added to the output request, and the designated application is acquired therefrom. Then, one of the buffers that match the application is selected so that the selected buffer is not currently subject to writing and has the largest available area. At step S66, the switch part 38 is controlled so as to make a connection between the terminal of the terminal number added to the output request and the selected buffer in the output window part 40. Then, the process returns to step S60, and the sequence of steps S60 - S66 is repeatedly executed.

In the third embodiment of the present invention, the signals passing through the output windows dependent on the applications are multiplexed in time division multiplexing. Thus, the signals can be output at the same time, and there is no need to wait for completion of outputting of the other packets. In addition, there is no delay fluctuation. The application-based allocation of the output windows can prevent signals of different applications from interfering each other. For example, the stream signal and the burst signal are distributed to the separate output windows, so that the transmission band for the stream signal can reliably be ensured easily. There may also be another arrangement in which a specific output window can be allocated as leased lines for a specific company. This would make it possible to perform reliable band allocation without band monitor.

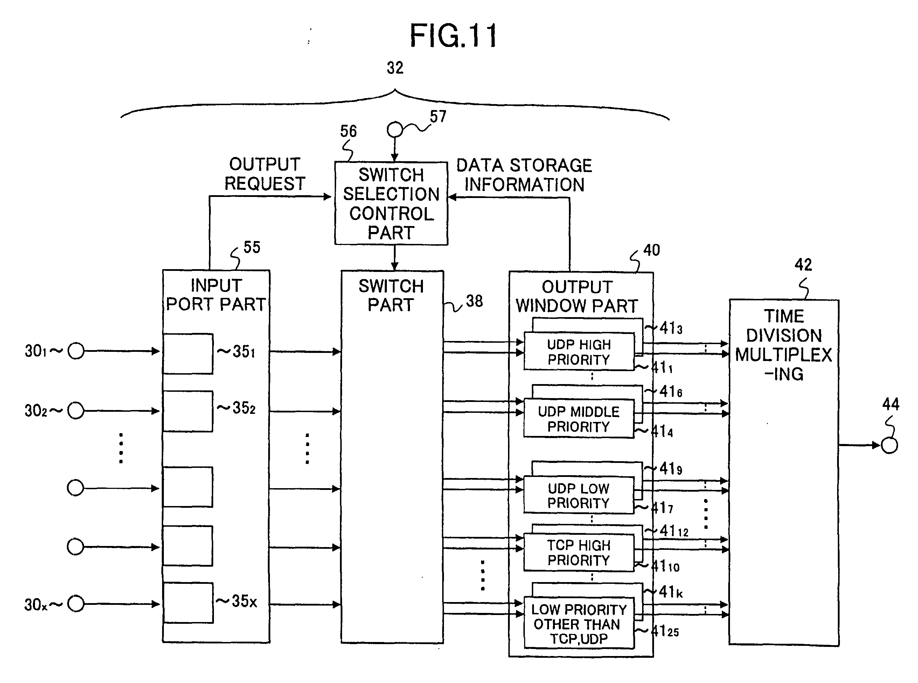

Fig. 11 is a block diagram of a transmission apparatus on the transmission side according to a fourth embodiment of the present invention. In Fig. 11, parts that are the same as those shown in Fig. 4 are given the same reference numerals. Serial data of the X system (X is, for example, 40) are applied to the terminals 30₁ through 30_{X}, and is supplied to an input port part 55 of the window selection control circuit 32. This circuit 32 includes the input port part 55, a switch selection control part 56 in addition to the aforementioned switch part 38 and output window part 40. The serial data may, for example, a 1 Gbps signal.

The input port part 55 includes the label add parts 35₁ through 35_{X} associated with the terminals 30₁ through 30_{X}, respectively. The label add parts 35₁ through 35_{X} add, as labels, the terminal numbers of the terminals 30₁ through 30_{X} to the IP packets supplied as serial data. The IP packets with the labels added thereto are supplied to the switch part 38. Further, the input port part 45 drops the QoS and the protocol or the next header from the header information of the input IP packets, and notifies the switch selection control part 56 of the output request with the dropped QoS, and the protocol or next header and the terminal number.

The IP packets that conform to the IPv4 have the format shown in Fig. 5A, in which the OoS is set in the eighth through eleventh bits of the first octet of the header and the protocol of the transport layer is set in the eight through fifteenth bits of the third octet of the header. The protocol has a value of "06" in the hexadecimal notation for TCP, and has a value of "17" in the hexadecimal notation for UDP. The IP packets that conform to the IPv6 have the format shown in Fig. 5B, in which the QoS is set in the fourth through seventh bits of the first octet of the header and the next header is set in the sixteenth through twenty-third bits of the second octet of the header. The next header indicates "06" in the hexadecimal notation for TCP and "17" in the hexadecimal notation for UDP. The label added to the IP packet consists of one byte and indicates the terminal number of the corresponding one of the terminals 30₁ through 30_{X}. The label is used to designate the output port at the reception-side apparatus that is the transmission designation.

The output window part 40 includes k buffers 41₁ through 41ₖ (k is, for example, 27). The buffers 41₁ through 41₃ are used for comparatively high priority for the UDP application. The buffers 41₄ through 41₆ are used for comparatively middle priority for the UDP application. The buffers 41₇ through 41₉ are used in comparatively low priority for the UDP application. The buffers 41₁₀ through 41₁₂ are used for comparatively high priority for the TCP application. The buffers 41₁₃ through 41₁₅ are used for comparatively middle priority for the TCP application. The buffers 41₁₆ through 41₁₈ are used in comparatively low priority for the TCP application. The buffers 41₁₉ through 41₂₁ are used for comparatively high priority for an application other than the UDP and TCP applications. The buffers 41₂₂ through 41₂₄ are used for comparatively middle priority for an application other than the UDP and TCP applications. The buffers 41₂₅ through 41ₖ are used in comparatively low priority for an application other than the UDP and TCP applications. The output window part 40 informs the switch selection control part 56 with data storage information concerning each of the buffers 41₁ through 41ₖ, which includes a respective S/P converter converting input serial data into parallel data.

The switch selection control part 56 includes a data type table in which priority levels corresponding to the QoS values and the data type information described by the protocol or header are defined. For example, the table defines the UDP application for the protocol or the next header value of "17", the TCP application for the value "06" and an application other than the UDP and TCP applications. Further, in the table, comparatively low priority is defined for QoS values of 0 - 3, and comparatively middle priority is defined for QoS values of 4 and 5. Further, comparatively high priority is defined for QoS values of 6 and 7. The contents of the priority table can be rewritten by an upper-order apparatus connected to the switch selection control part 56 via a terminal 57.

Upon receipt of an output request from the input port part 55, the switch selection control part 56 refers to the data type table by the data type information value added to the output request and obtains the priority level and the application from the data type table. Then, the part 56 checks the data storage information corresponding to the obtained priority level and application. If the IP packet is assigned the high priority level in the UDP application, the switch selection control part 36 checks the data storage information concerning the buffers 41₁ - 41₃. If the IP packet is assigned the middle priority level in the TCP application, the switch selection control part 56 checks the data storage information concerning the buffers 41₄ - 41₆. If the IP packet is assigned the low priority level in an application other than the UDP and TCP applications, the switch selection control part 56 checks the data storage information concerning the buffers 41₂₅ - 41ₖ. Then, the switch selection control part 56 selects one of the candidate buffers which is not currently subject to writing and the comparatively largest available area. Then, the switch selection control part 56 controls the switch part 38 so as to make a connection between the terminal (one of the terminals 30₁ - 30_{X}) having the terminal number added to the output request and the selected buffer in the output window part 40.

In the above manner, the IP packets input to the terminals 30₁ - 30_{X} are distributed to the buffers in the output window part 40 in accordance with the priority levels and the application information added to the IP packets, and are stored in the selected buffers. The buffers of the output window part 40 may be FIFO buffers. The IP packets read out of the buffers are then supplied to a time-division multiplexing part 42 shown in Fig. 4. An output signal of the time-division multiplexing part 42 is, for example, SONET-OC768 of 40 Gbps.

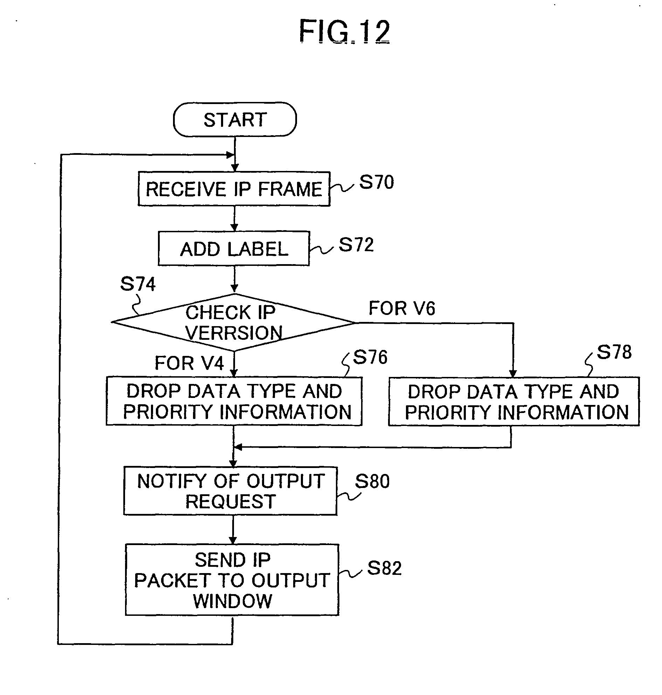

Fig. 12 is a flowchart of an input process executed by the input port part 55. At step S70, an IP packet is received via one of the terminals 30₁ - 30_{X}. At step S72, the label of the terminal number of the terminal to which the IP packet is input is added to the IP packet. At step S74, it is determined whether the received IP packet has the format of IPv4 or IPv6.

If the received IP packet has the IPv4 format, the data type information (protocol) and the QoS are dropped from the header of the IP packet at step S76. If the received IP packet has the IPv6 format, the data type information (next header) and the QoS are dropped from the header of the IP packet at step S78. At step S80, the switch selection control part 56 is notified of the output request with the terminal number, the data type information and the QoS added thereto. At step S82, the IP packet with the label added is sent to the switch part 38. Then, the process returns to step S70, and the sequence of steps S70 - S82 is repeated.

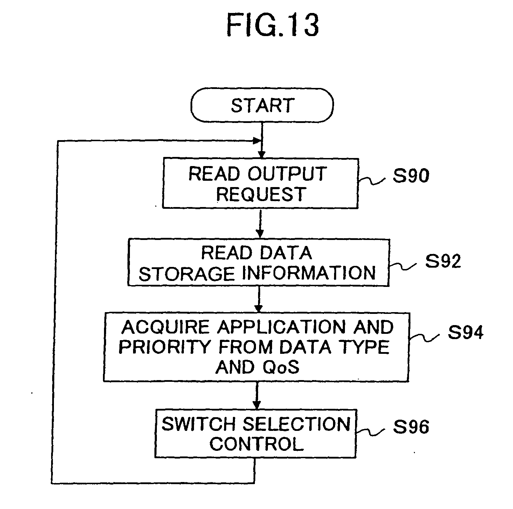

Fig. 13 is a flowchart of a selection control process executed by the switch selection control part 56. At step S90, the output request is received via the input port part 55. At step S92, the data storage information concerning the buffers 41₁ - 41ₖ from the output window part 40 is read. At step S94, the priority table is referred to by the data type information added to the output request, and the application and the priority level are acquired therefrom. Then, one of the buffers having the priority level acquired is selected so that the selected buffer is not currently subject to writing and has the largest available area. At step S96, the switch part 38 is controlled so as to make a connection between the terminal of the terminal number added to the output request and the selected buffer in the output window part 40. Then, the process returns to step S90, and the sequence of steps S90 - S96 is repeatedly executed.

As described above, a plurality of buffers are assigned for each of the different priority levels in the output window part 40, and the input IP packet is stored in the selected buffer that is one of the buffers having the priority level and application corresponding to the QoS and data type information of the input IP packet and has the largest available area. It is therefore possible to reduce the possibility that input IP packets may be discarded due to delay or overflow in buffering and to allocate the transmission bands for services more finely.

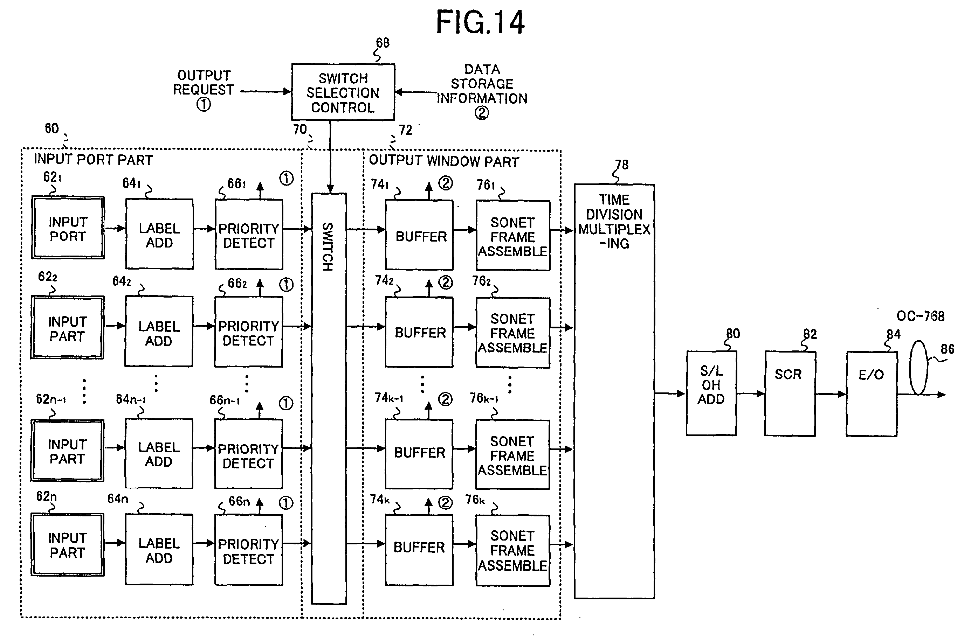

Fig. 14 is a block diagram of a transmission apparatus on the transmission side according to a fifth embodiment of the present invention. Serial data of the n system are applied to input ports 62₁ through 62ₙ of an input port part 60. The serial data may, for example, a 1 Gbps signal.

The input port part 60 includes the label add parts 62₁ through 62ₙ associated with the terminals 62₁ through 62ₙ, respectively. The label add parts 62₁ through 62ₙ add, as labels, the terminal numbers of the input ports 62₁ through 62ₙ to the IP packets supplied as serial data. The IP packets with the labels added thereto are supplied to priority detection parts 66₁ through 66ₙ. The priority detection parts 66₁ through 66ₙ drop the QoS and the protocol or next header from the header information of the IP packets, and notify a switch selection control part 68 with an output request with the QoS, the protocol or the next header, and the terminal number. Further, the priority detection parts 66₁ through 66ₙ supply the IP packets with the labels added to a switch 70.

The IP packets that conform to the IPv4 have the format shown in Fig. 5A, in which the OoS is set in the eighth through eleventh bits of the first octet of the header and the protocol of the transport layer is set in the eight through fifteenth bits of the third octet of the header. The protocol has a value of "06" in the hexadecimal notation for TCP, and has a value of "17" in the hexadecimal notation for UDP. The IP packets that conform to the IPv6 have the format shown in Fig. 5B, in which the QoS is set in the fourth through seventh bits of the first octet of the header and the next header is set in the sixteenth through twenty-third bits of the second octet of the header. The next header indicates "06" in the hexadecimal notation for TCP and "17" in the hexadecimal notation for UDP.

The output window part 72 includes k buffers 74₁ through 74ₖ (k is, for example, 27). The buffers 74₁ through 74₃ are used for comparatively high priority for the UDP application. The buffers 74₄ through 74₆ are used for comparatively middle priority for the UDP application. The buffers 74₇ through 74₉ are used in comparatively low priority for the UDP application. The buffers 74₁₀ through 74₁₂ are used for comparatively high priority for the TCP application. The buffers 74₁₃ through 74₁₅ are used for comparatively middle priority for the TCP application. The buffers 74₁₆ through 74₁₈ are used in comparatively low priority for the TCP application. The buffers 74₁₉ through 74₂₁ are used for comparatively high priority for an application other than the UDP and TCP applications. The buffers 74₂₂ through 74₂₄ are used for comparatively middle priority for an application other than the UDP and TCP applications. The buffers 74₂₅ through 74ₖ are used in comparatively low priority for an application other than the UDP and TCP applications. The output window part 72 informs the switch selection control part 68 with data storage information concerning each of the buffers 74₁ through 74ₖ, which includes a respective S/P converter converting input serial data into parallel data.

The switch selection control part 68 includes a data type table in which priority levels corresponding to the QoS values and the data type information described by the protocol or header are defined. For example, the table defines the UDP application for the protocol or the next header value of "17", the TCP application for the value "06" and an application other than the UDP and TCP applications. Further, in the table, comparatively low priority is defined for QoS values of 0 - 3, and comparatively middle priority is defined for QoS values of 4 and 5. Further, comparatively high priority is defined for QoS values of 6 and 7.

Upon receipt of an output request from the input port part 60, the switch selection control part 68 refers to the data type table by the data type information value added to the output request and obtains the priority level and the application from the data type table. Then, the part 68 checks the data storage information corresponding to the obtained priority level and application. If the IP packet is assigned the high priority level in the UDP application, the switch selection control part 36 checks the data storage information concerning the buffers 74₁ - 74₃. If the IP packet is assigned the middle priority level in the TCP application, the switch selection control part 68 checks the data storage information concerning the buffers 74₄ - 74₆. If the IP packet is assigned the low priority level in an application other than the UDP and TCP applications, the switch selection control part 68 checks the data storage information concerning the buffers 74₂₅ - 74ₖ. Then, the switch selection control part 68 selects one of the candidate buffers which is not currently subject to writing and the comparatively largest available area. Then, the switch selection control part 68 controls the switch part 70 so as to make a connection between the input port (one of the input ports 62₁ - 62ₙ) having the terminal number added to the output request and the selected buffer in the output window part 72.

In the above manner, the IP packets input to the input ports 62₁ - 62ₙ are distributed to the buffers in the output window part 72 in accordance with the priority levels and the application information added to the IP packets, and are stored in the selected buffers. The k buffers 74₁ - 74ₖ of the output window part 72 read data in FIFO formation, and supply the read data to SONET frame assembly parts 76₁ through 76ₖ. The SONET frame assembly parts 76₁ through 76ₖ add path overheads for mapping the IP packets with the labels added and create a SPE (Synchronous Payload Envelope) by a pointer process. The SONET frames thus produced are then supplied to a time-division multiplexing part 78.

The time division multiplexing part 78 multiplexes the SONET frames in the time division multiplexing formation, and serially supplies the multiplexed data to an S/LOH (Section/Line OverHead) add part 80. The S/LOH add part 80 adds the section overhead and the line overhead to the serial data supplied thereto. Then, an SCR (SCRamble) part 82 scrambles the serial data, and scrambled serial data is converted into an optical signal by an E/O (Electro-Optic) conversion part 84. A signal thus produced is, for example, a SONET-OC768 of 40 Gbps, and is supplied to an optical fiber network 86.

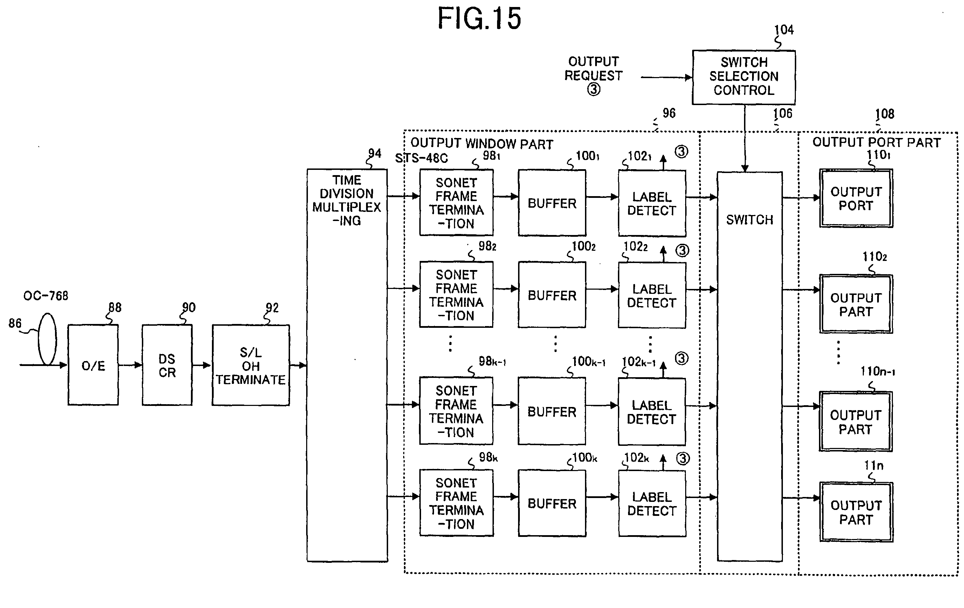

Fig. 15 is a block diagram of a transmission apparatus on the reception side according to a sixth embodiment of the present invention. The configuration shown in Fig. 15 is a reception circuit associated with the transmission circuit shown in Fig. 14. Referring to Fig. 15, the 40 Gbps SONET-OC768 signal transmitted over the optical fiber network 86 is received by an O/E (Opto-Electric) conversion part 88 and is converted into an electrical signal. Then, a DSCR (DeSCRamble) part 90 descrambles the electrical signal. An S/LOH termination part 92 removes the section overhead and the line overhead from the descrambled signal, so that resultant serial data is supplied to a time division multiplexing part 94.

The part 94 demultiplexes the multiplexed signal into SONET frames, which are then supplied to SONET termination parts 98₁ through 98ₖ in an output window part 96. SONET termination parts 98₁ through 98ₖ remove the path overheads by the pointer process for the SONET frame, and convert the SONET frames into the formation of IP packets with the labels added. The IP packets thus reproduced are stored in buffers 100₁ through 100ₖ. Then, data are read from the buffers 100₁ through 100ₖ, in the first-in first-out formation, and are supplied to label detection parts 102₁ through 102ₖ.

The label detection parts 102₁ through 102ₖ detect the labels added to the IP packets, and notify a switch selection control part 104 with output requests with the detected labels and buffer numbers (1 - k) added thereto. Further, label detection parts 102₁ through 102ₖ supply the IP packets from which the labels have been removed to a switch part 106. The switch selection control part 104 controls the switch part 106 to make a connection of the IP packet related to the issuance of the output request with the output port specified by the label added to the output request (one of the terminals 110₁ - 110ₙ in the output port part 108). Thus, the IP packets can be output via the output ports 110₁ - 110ₙ designated by the labels.

In the above-mentioned manner, the present invention transmission apparatus is allowed to coexist with the existing SONET network. The transmission apparatus used in SONET have a matured circuit configuration that has been established. Hence, the process involved in the present invention is simple. It is also possible to send the SONET signal and the packet signal in the coexisting fashion by allocating some ports to the SONET signal.

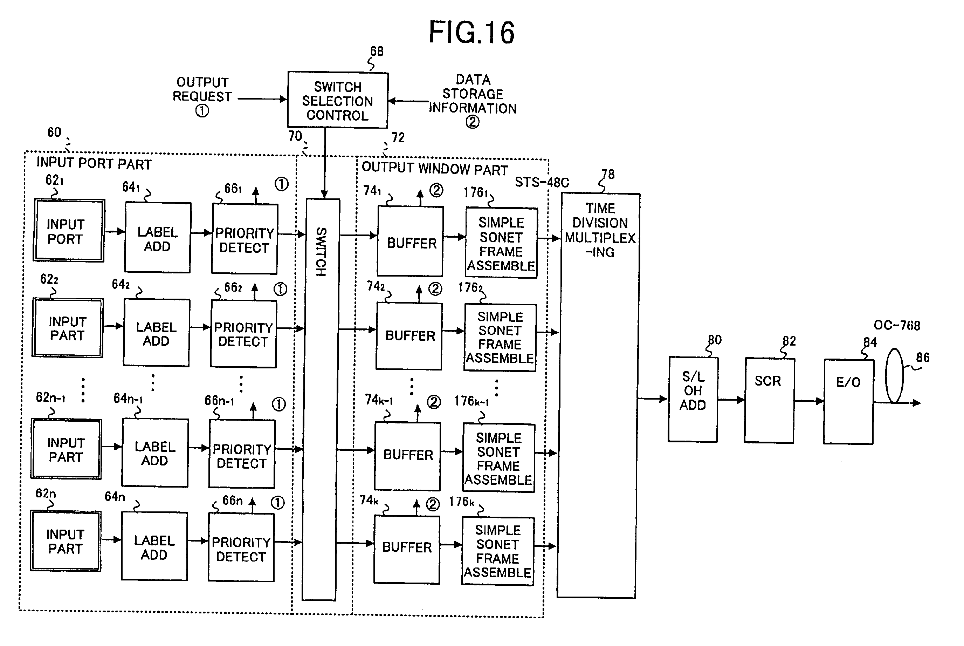

Fig. 16 is a block diagram of a transmission apparatus on the transmission side according to a seventh embodiment of the present invention. In Fig. 16, parts that are the same as those shown in Fig. 14 are given the same reference numerals. In the seventh embodiment, simple SONET frame assembly parts 176₁ through 176ₖ instead of the SONET frame assembly parts 76₁ through 76ₖ shown in Fig. 14.

The simple SONET frame assembly parts 176₁ through 176ₖ assembly simple SONET frames by adding a fixed value as a pointer value without adding the path overhead to the IP packet with the label added supplied from the buffers. The simple SONET frames thus produced are supplied to the time division multiplexing part 78.

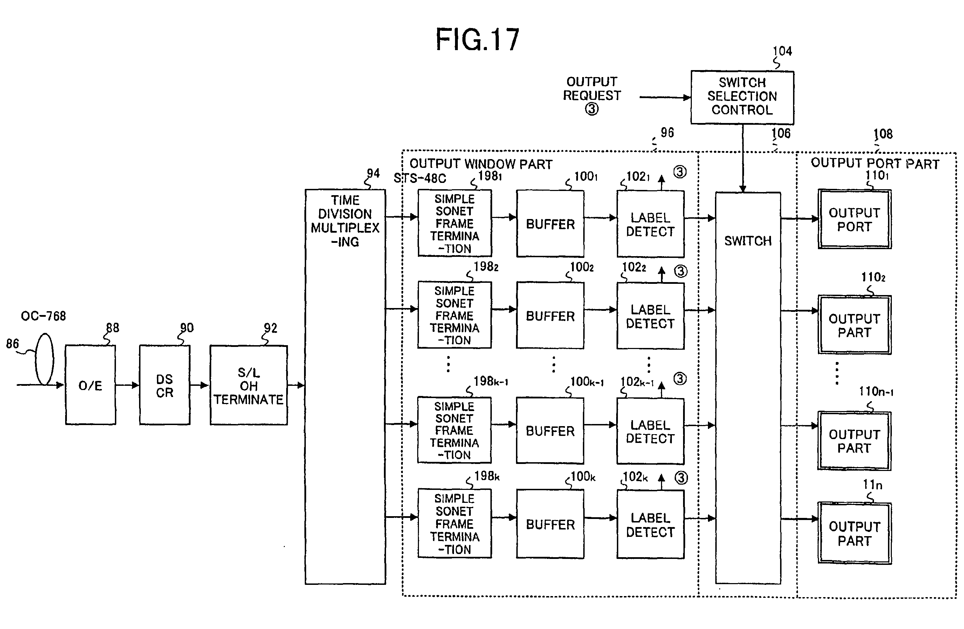

Fig. 17 is a block diagram of a transmission apparatus on the reception side according to an eighth embodiment of the present invention. In Fig. 17, parts that are the same as those shown in Fig. 15 are given the same reference numerals. In the configuration shown in Fig. 17, simple SONET frame termination parts 198₁ through 198ₖ are used instead of the SONET frame termination parts 98₁ through 98ₖ shown in Fig. 15.

The simple SONET frame termination parts 198₁ through 198ₖ remove the pointer values of the SONET frames without performing the pointer process for the SONET frames, and convert the formation of IP packets with the labels added. Then, these IP packets are stored in the buffers 100₁ through 100ₖ.

In the present embodiment, the pointer values are fixed in the simple SONET frames in which data is mapped. Therefore, the simple SONET frames can be handled in the same manner as the regular SONET, so that the present embodiment transmission apparatus can coexist with the existing SONET network.

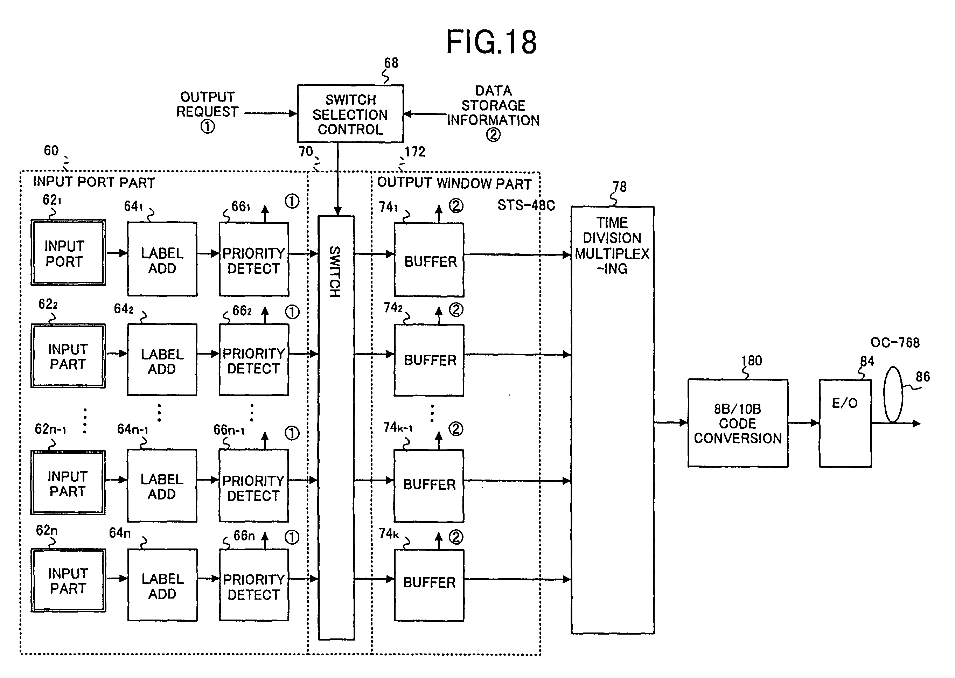

Fig. 18 is a block diagram of a transmission apparatus on the transmission side according to a ninth embodiment of the present invention. In Fig. 18, parts that are the same as those shown in Fig. 14 are given the same reference numbers. In the present embodiment, an 8B/10B code conversion frame is used instead of the SONET frame. Correspondingly, only k buffers 74₁ through 74ₖ are provided in an output window part 172. The IP packets with the labels added thereto that are read from the buffers 74₁ through 74ₖ are multiplexed in time division multiplexing at the time division multiplexing part 78, and are supplied to an 8B/10B code conversion part 180 as serial data. The part 180 converts the received serial data into an 8B/10B code. Then, the E/O conversion part 84 converts the input signal into an optical signal, which is then sent to the optical fiber network 86.

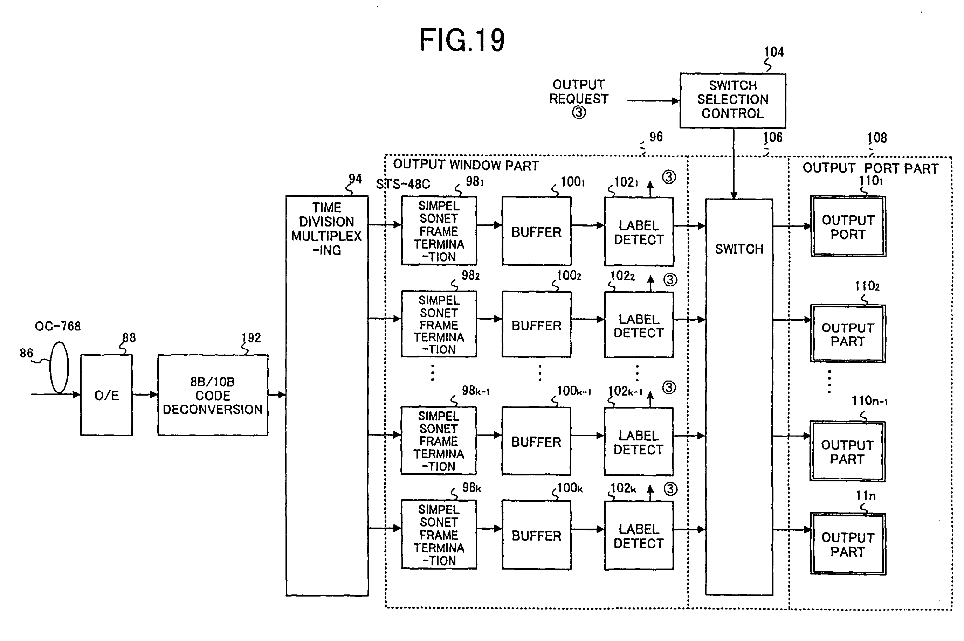

Fig. 19 is a block diagram of a transmission apparatus on the reception side according to a tenth embodiment of the present invention. In Fig. 19, parts that are the same as those shown in Fig. 15 are given the same reference numerals. The configuration shown in Fig. 19 is a reception circuit, which corresponds to the transmission-side circuit shown in Fig. 18. In the tenth embodiment of the present invention, the optical signal transmitted over the optical fiber network 86 is received and converted into an electrical signal by the E/O conversion part 88, the electrical signal being supplied to an 8B/10B code deconversion part 192. The electrical signal is subjected to an 8B/10B code deconversion process, the resultant signal being supplied to the time division multiplexing part 94. The IP packets separated from each other by the time division multiplexing part 94 are respectively stored in buffers 100₁ through 100ₖ.

The tenth embodiment does not need to assemble the frames in contrast to the SONET and to employ the scramble process. Therefore, the tenth embodiment is comparatively simple. Although the data arrangement after division differs from that before multiplexing, the label includes input port information, so that data can be retrieved without a series of data applied to the same buffer in the output window part 96.

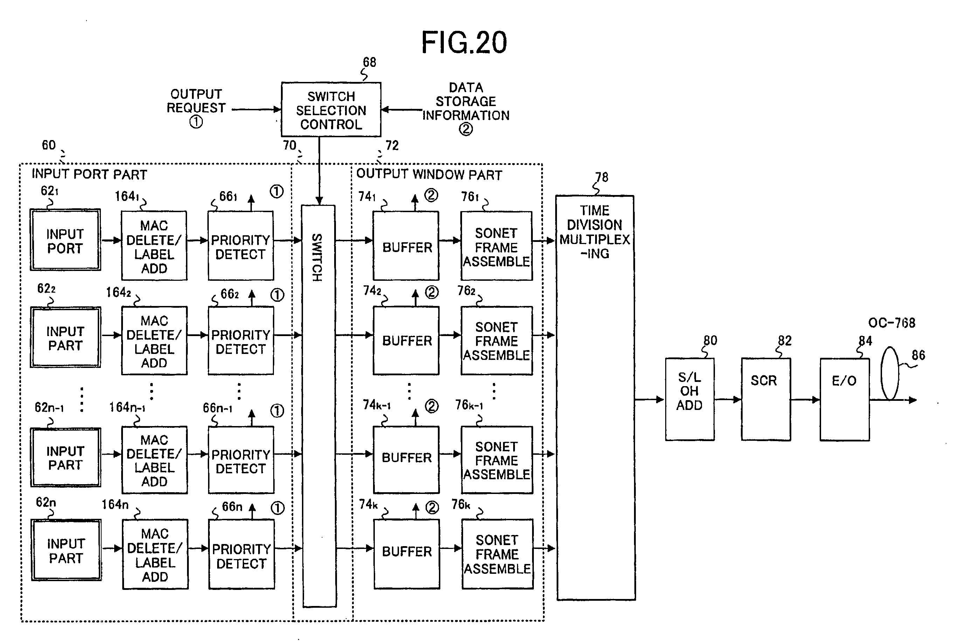

Fig. 20 is a block diagram of a transmission apparatus on the transmission side according to an eleventh embodiment of the present invention. In Fig. 20, parts that are the same as those shown in Fig. 14 are given the same reference numbers. In the eleventh embodiment, MAC (Media Access Control) delete/label add parts 164₁ through 164ₙ are substituted for the label add parts 64₁ through 64ₙ shown in Fig. 14. The MAC delete/label add parts 164₁ through 164ₙ delete the MAC addresses of the IP packets that are input as serial data, and add, as labels, the terminal numbers of the input ports 62₁ through 62n to which the packets have been input. The terminal numbers are then supplied to the priority detection parts 66₁ through 66ₙ.

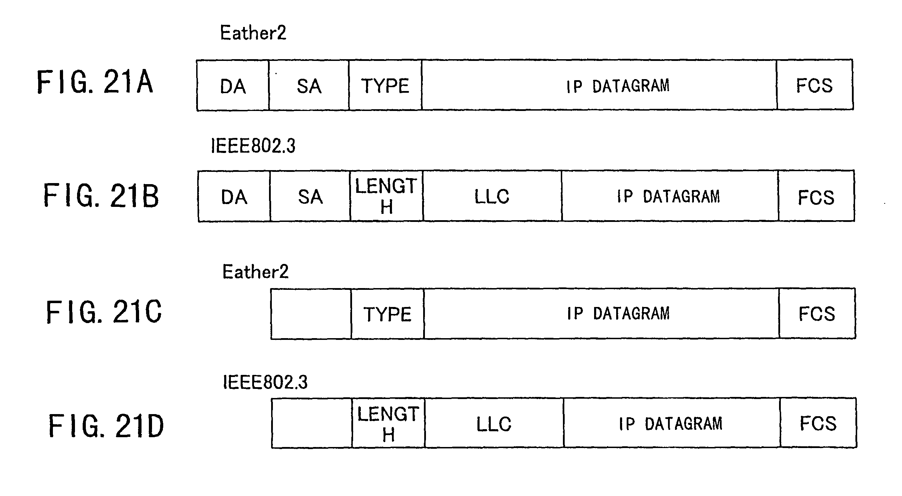

When the input signal is an IP packet, the data link with the reception-side apparatus does not need the IEEE802.3/802.2 because of communication between the SONET apparatuses. Therefore, the MAC addresses contained in the destination address (DA) and source address included in the MAC header of the IP packet are not needed to establish communication with the reception-side apparatus. Taking into consideration the above, the destination and source addresses in the IP packets of Eather2 and IEEE802.3 respectively shown in Figs. 21A and 21B are deleted, so that formats shown in Figs. 21C and 21D are used. This reduces the packet length so that the data transmission efficiency can be improved. Further, an ARP (Address Resolution Protocol) is not needed for communications between the above SONET apparatuses.

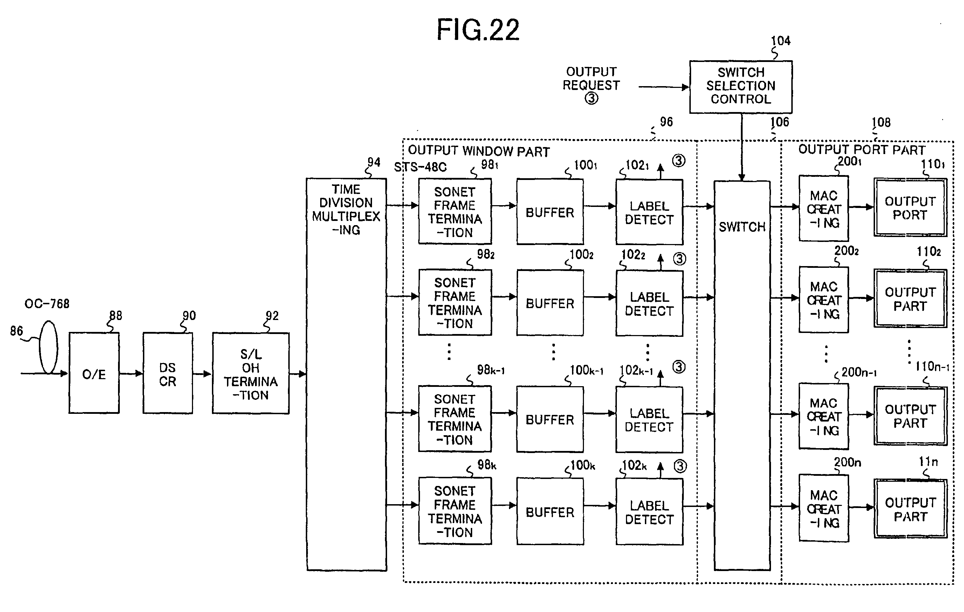

Fig. 22 is a block diagram of a transmission apparatus according to an twelfth embodiment of the present invention. In Fig. 22, parts that are the same as those shown in Fig. 15 are given the same reference numbers. In the present embodiment, MAC creating parts 200₁ through 200ₙ are provided in the output port part 108. The MAC addresses of the destination address and the source address corresponding to the output ports 110₁ through 110ₙ are added to the IP packets supplied from the switch part 106. Then, the IP packets with the addresses added are output via the output ports 110₁ through 110ₙ.

The present invention is not limited to the specifically disclosed embodiments, and variations and modifications may be made without departing from the scope of the invention, as defined by the claims.

The present application is based on the Japanese Priority Application No. 2001-18645.

## Claims

1. A data transmission method comprising the steps of:
controlling switches that connect an input port part (14; 34; 45; 55; 60) having a plurality of input ports(101-10m; 301-30x; 62l-62n) to an output buffer part (20; 40; 72; 96; 172) having a plurality of buffers (411-41k; 74l-74k) in accordance with data storage states of the plurality of buffers; and **characterised by**
storing data from the plurality of input ports into a buffer that is not currently used for writing and has an available area, said buffer being included in the plurality of buffers; and
multiplexing the data read from the buffers in time division multiplexing for transmission.

2. A transmission apparatus comprising:
an input port part (14; 34; 45; 55; 60) having a plurality of input ports (101-10m; 301-30x; 621-62n) ;
an output buffer part (20; 40; 72; 96; 172) having a plurality of buffers (411-41k; 741-74k) ;
a switch part (18; 38; 70) adapted to make connections between the plurality of input ports and the plurality of buffers; and **characterised by**
a selection control circuit (12; 32) adapted to control the switch part so that data from the plurality of input ports are stored in a buffer that is not currently used for writing and has an available area among the plurality of buffers in accordance with data storage states of the plurality of buffers; and
a time division multiplexing part (22; 78) adapted to multiplex the data read from the plurality of buffers in time division multiplexing for transmission.

3. The transmission apparatus as claimed in claim 2, wherein:
the output buffer part includes a plurality of buffers for each of priorities; and
the selection control circuit is adapted to control the switch part to cause the data from the plurality of input ports to be stored in a buffer which is included in the plurality of buffers and is not currently used for writing and has an available area in accordance with storage states of the plurality of buffers for each of the priorities.

4. The transmission apparatus as claimed in claim 2, wherein:
the output buffer part includes a plurality of buffers for each of data types; and
the selection control circuit is adapted to control the switch part to cause the data from the plurality of input ports to be stored in a buffer which is included in the plurality of buffers and is not currently used for writing and has an available area in accordance with storage states of the plurality of buffers for each of the data types.

5. The transmission apparatus as claimed in claim 2, wherein:
the output buffer part includes a plurality of buffers for each of priorities and each of data types; and
the selection control circuit is adapted to control the switch part to cause the data from the plurality of input ports to be stored in a buffer which is included in the plurality of buffers and is not currently used for writing and has an available area in accordance with storage states of the plurality of buffers for each of the priorities and each of the data types.

6. The transmission apparatus as claimed in claim 2, wherein the data input to the input port part include an IP packet.

7. The transmission apparatus as claimed in claim 2, wherein the input port part comprises label add parts (351-35x; 621-62n; 64l-64n) which are adapted to add labels to the plurality of input ports.

8. The transmission apparatus as claimed in claim 2, wherein the output buffer part comprises SONET frame assembly parts (761-76k; 1761-176k) which are adapted to assemble data read from the plurality of buffers into respective SONET frames and to then supply the SONET frames to the time division multiplexing part.

9. The transmission apparatus as claimed in claim 2, wherein the output buffer part comprises simple SONET frame assembly parts which are adapted to assemble data read from the plurality of buffers into respective SONET frames and to then supply the SONET frames to the time division multiplexing part.

10. The transmission apparatus as claimed in claim 2, further comprising an 8B/10B conversion part (84; 180) that is adapted to convert multiplexed data from the time division multiplexing part into data having an 8B/10B conversion format for transmission.

11. The transmission apparatus as claim in claim 2, further comprising MAC delete/label add parts (1641-164n) that are adapted to delete MAC addresses from IP packets and add labels corresponding to the plurality of input ports to IP packets that are the data input to the input port part.

12. The transmission apparatus as claimed in claim 2, further comprising:
label detection parts (1021-102k) that are adapted to detect labels added to a plurality of items of data obtained by subjecting a received signal to demultiplexing in a second time division multiplexing part (94);
a plurality of second buffers (1001-100k) that are adapted to store the plurality of items of data;
a second switch part (106) that is adapted to make connections between the plurality of second buffers and a plurality of output ports (1101-110n); and
a second selection control circuit (104) that is adapted to control the second switch part so that the plurality of items of data can be output via the output ports dependent on the labels detected.

## Patentansprüche

1. Ein Datenübertragungsverfahren, die Schritte umfassend:
Steuerung von Schaltern, die einen Eingangsport-Bestandteil (14; 34; 45; 55; 60), welcher eine Mehrzahl von Eingangsports (101-10m; 301-30x; 621-62n) aufweist, mit einem Ausgangspuffer-Bestandteil (20; 40; 72; 96; 172), welcher eine Mehrzahl von Puffern (411-41k; 741-74k) aufweist, verbindet, in Übereinstimmung mit Datenspeicherzuständen der Mehrzahl von Puffern; und **gekennzeichnet durch**
Speicherung von Daten von der Mehrzahl von Eingangsports in einem Puffer, der nicht laufend zum Schreiben benutzt wird und einen zugänglichen Bereich aufweist, wobei der Puffer in die Mehrzahl von Puffern eingebettet ist; und
Multiplexen der Daten, die aus den Puffern im Zeitmultiplexverfahren zur Übertragung gelesen werden.

2. Eine Übertragungsvorrichtung, umfassend:
einen Eingangsport-Bestandteil (14; 34; 45; 55; 60), der eine Mehrzahl von Eingangsports (101-10m; 301-30x; 621-62n) aufweist;
einen Ausgangspuffer-Bestandteil (20; 40; 72; 96; 172), der eine Mehrzahl von Puffern (411-41k; 741-74k) aufweist;
einen Schalterbestandteil (18; 38; 70), der angepasst ist, Verbindungen zwischen der Mehrzahl von
Eingangsports und der Mehrzahl von Puffern zu machen; und **gekennzeichnet durch**
eine Auswahlsteuerungsschaltung (12; 32), die angepasst ist zur Steuerung des Schalterbestandteils, so dass die Daten von der Mehrzahl von Eingangsports in einem Puffer gespeichert werden, der nicht laufend zum Schreiben benutzt wird und einen zugänglichen Bereich unter der Mehrzahl von Puffern aufweist, in Übereinstimmung mit Datenspeicherzuständen der Mehrzahl von Puffern; und
ein Zeitmultiplex-Bestandteil (22; 78), der angepasst ist die Daten zu multiplexen, welche aus der Mehrzahl von Puffern im Zeitmultiplexverfahren zur Übertragung gelesen werden.

3. Die Übertragungsvorrichtung wie in Anspruch 2 beansprucht, wobei:
der Ausgangspuffer-Bestandteil eine Mehrzahl von Puffern für alle Prioritäten enthält; und
die Auswahlsteuerungsschaltung angepasst ist zur Steuerung des Schalterbestandteils, um zu veranlassen, dass die Daten von der Mehrzahl von Eingangsports in einem Puffer zu speichern sind, der in die Mehrzahl von Puffern eingebettet ist und nicht laufend zum Schreiben benutzt wird und einen zugänglichen Bereich aufweist, in Übereinstimmung mit Speicherzuständen der Mehrzahl von Puffern für alle Prioritäten.

4. Die Übertragungsvorrichtung wie in Anspruch 2 beansprucht, wobei:
der Ausgangspuffer-Bestandteil eine Mehrzahl von Puffern für alle Datentypen enthält; und
die Auswahlsteuerungsschaltung angepasst ist zur Steuerung des Schalterbestandteils, um zu veranlassen, dass die Daten von der Mehrzahl von Eingangsports in einem Puffer zu speichern sind, der in die Mehrzahl von Puffern eingebettet ist und nicht laufend zum Schreiben benutzt wird und einen zugänglichen Bereich aufweist, in Übereinstimmung mit Speicherzuständen der Mehrzahl von Puffern für alle Datentypen.

5. Die Übertragungsvorrichtung wie in Anspruch 2 beansprucht, wobei:
der Ausgangspuffer-Bestandteil eine Mehrzahl von Puffern für alle Prioritäten und alle Datentypen enthält; und
die Auswahlsteuerungsschaltung angepasst ist zur Steuerung des Schalterbestandteils, um zu veranlassen, dass die Daten von der Mehrzahl von Eingangsports in einem Puffer zu speichern sind, der in die Mehrzahl von Puffern eingebettet ist und nicht laufend zum Schreiben benutzt wird und einen zugänglichen Bereich aufweist, in Übereinstimmung mit Speicherzuständen der Mehrzahl von Puffern für alle Prioritäten und alle Datentypen.

6. Die Übertragungsvorrichtung wie in Anspruch 2 beansprucht, wobei der Dateneingang des Eingangsport-Bestandteils ein IP-Paket enthält.

7. Die Übertragungsvorrichtung wie in Anspruch 2 beansprucht, wobei der Eingangsport-Bestandteil Kennzeichnungshinzufüge-Bestandteile (351-35x; 621-62n; 641-64n) enthält, die angepasst sind zum Hinzufügen von Kennzeichnungen an die Mehrzahl von Eingangsports.

8. Die Übertragungsvorrichtung wie in Anspruch 2 beansprucht, wobei der Ausgangspuffer-Bestandteil SONET-Rahmensammlungs-Bestandteile (761-76k; 1761-176k) enthält, die angepasst sind, Daten, welche aus der Mehrzahl von Puffern gelesen werden, in entsprechenden SONET-Rahmen zu sammeln und die SONET-Rahmen dann zum Zeitmultiplex-Bestandteil zuzuführen.

9. Die Übertragungsvorrichtung wie in Anspruch 2 beansprucht, wobei der Ausgangspuffer-Bestandteil einfache SONET-Rahmensammlungs-Bestandteile umfasst, die angepasst sind, Daten, welche aus der Mehrzahl von Puffern gelesen werden, in entsprechenden SONET-Rahmen zu sammeln und die SONET-Rahmen dann zum Zeitmultiplex-Bestandteil zuzuführen.

10. Die Übertragungsvorrichtung wie in Anspruch 2 beansprucht, die weiterhin ein 8B/10B Umwandlungsbestandteil (84; 180) enthält, der angepasst ist zur Umwandlung von gemultiplexten Daten vom Zeitmultiplex-Bestandteil in Daten, die zur Übertragung ein 8B/10B Umwandlungsformat aufweisen.

11. Die Übertragungsvorrichtung wie in Anspruch 2 beansprucht, die weiterhin MAC-Lösch-/Kennzeichnungshinzufüge-Bestandteile (1641-164n) enthält, die angepasst sind zur Löschung von MAC-Adressen von IP-Paketen und zum Hinzufügen von Kennzeichnungen entsprechend der Mehrzahl von Eingangsports zu den IP-Paketen, die der Dateneingang des Eingangports-Bestandteils sind.

12. Die Übertragungsvorrichtung wie in Anspruch 2 beansprucht, weiterhin umfassend:
Kennzeichnungsdetektierungs-Bestandteile (1021-102k), die angepasst sind zur Detektierung von zu einer Mehrzahl von Dateneinheiten hinzugefügten Kennzeichnungen, die **dadurch** erhalten werden, dass ein empfangenes Signal in einem zweiten Zeitmultiplex-Bestandteil (94) Demultiplexing unterworfen wird;
eine Mehrzahl von zweiten Puffern (1001-100k), die angepasst sind zur Speicherung der Mehrzahl von Dateneinheiten;
einen zweiten Schalterbestandteil (106), der angepasst ist Verbindungen zwischen der Mehrzahl von zweiten Puffern und einer Mehrzahl von Ausgangsports (1101-110n) zu machen; und
eine zweite Auswahlsteuerungsschaltung (104), die angepasst ist zur Steuerung des zweiten Schalterbestandteils, so dass die Mehrzahl der Dateneinheiten über die Ausgangsports ausgegeben werden können, abhängig von den detektierten Kennzeichnungen.

## Revendications

1. Procédé de transmission de données comprenant les étapes consistant à :
commander des commutateurs qui connectent une partie de ports d'entrée (14 ; 34 ; 45 ; 55 ; 60) comportant une pluralité de ports d'entrée (101 à 10m ; 301 à 30x ; 621 à 62n) à une partie de mémoire tampon de sortie (20 ; 40 ; 72 ; 96 ; 172) comportant une pluralité de mémoires tampons (411 à 41 k ; 741 à 74k) conformément à des états de mémorisation de données d'une pluralité de mémoires tampons, et **caractérisé par** les étapes consistant à
stocker des données provenant d'une pluralité de ports d'entrée dans une mémoire tampon qui n'est pas actuellement utilisée pour une écriture et comporte une zone disponible, ladite mémoire tampon étant comprise dans une pluralité de mémoires tampons, et
multiplexer les données lues à partir des mémoires tampons par multiplexage par répartition dans le temps pour une transmission.

2. Dispositif de transmission comprenant :
Une partie de ports d'entrée (14 ; 34 ; 45 ; 55 ; 60) comportant une pluralité de ports d'entrée (101 à 10m ; 301 à 30x ; 621 à 62n),
une partie de mémoire tampon de sortie (20 ; 40 ; 72 ; 96 ; 172) comportant une pluralité de mémoires tampons (411 à 4 1 k ; 741 à 74k),
une partie de commutation (18 ; 38 ; 70) conçue pour établir les connexions entre la pluralité de ports d'entrée et la pluralité de mémoires tampons, et **caractérisé par**
un circuit de commande de sélection (12 ; 32) conçu pour commander la partie de commutation de sorte que les données provenant d'une pluralité de ports d'entrée soient stockées dans une mémoire tampon qui n'est pas actuellement utilisée pour l'écriture et présente une zone disponible parmi la pluralité de mémoires tampons conformément aux états de mémorisation de données de la pluralité de mémoires tampons, et
une partie de multiplexage à répartition dans le temps (22 ; 78) conçue pour multiplexer les données lues à partir de la pluralité de mémoires tampons dans le multiplexage à répartition dans le temps pour une transmission.

3. Dispositif de transmission selon la revendication 2, dans lequel :
la partie de mémoire tampon de sortie comprend une pluralité de mémoires tampons pour chacune des priorités, et
un circuit de commande de sélection est conçu pour commander la partie de commutation pour amener les données provenant de la pluralité de ports d'entrée à être stockées dans une mémoire tampon qui est comprise dans la pluralité de mémoires tampons et n'est pas actuellement utilisée pour une écriture et comporte une zone disponible conformément aux états de mémorisation d'une pluralité de mémoires tampons pour chacune des priorités.

4. Dispositif de transmission selon la revendication 2, dans lequel
la partie de mémoire tampon de sortie comprend une pluralité de mémoires tampons pour chaque type de données, et
le circuit de commande de sélection est conçu pour commander la partie de commutation pour amener les données provenant de la pluralité de ports d'entrée à être stockées dans une mémoire tampon qui est comprise dans une pluralité de mémoires tampons et n'est pas actuellement utilisée pour une écriture et comporte une zone disponible conformément aux états de mémorisation d'une pluralité de mémoires tampons pour chaque type de données.

5. Dispositif de transmission selon la revendication 2, dans lequel :
la partie de mémoire tampon de sortie comprend une pluralité de mémoires tampons pour chacune des priorités et chaque type de données, et
le circuit de commande de sélection est conçu pour commander la partie de commutation pour amener les données provenant de la pluralité de ports d'entrée à être stockées dans une mémoire tampon qui est compris dans la pluralité de mémoires tampons et n'est pas actuellement utilisé pour une écriture et présente une zone disponible conformément aux états de mémorisation de la pluralité de mémoires tampons pour chacune des priorités et chaque type de données.

6. Dispositif de transmission selon la revendication 2, dans lequel l'entrée de données vers la partie de ports d'entrée comprend un paquet IP.

7. Dispositif de transmission selon la revendication 2, dans lequel la partie de ports d'entrée comprend des parties d'ajout d'étiquettes (351 à 35x ; 621 à 62n ; 641 à 64n), qui sont conçues pour ajouter des étiquettes à la pluralité de ports d'entrée.

8. Dispositif de transmission selon la revendication 2, dans lequel la partie de mémoire tampon de sortie comprend des parties d'assemblage de trame SONET (761 à 76k ; 1761 à 176k) qui sont conçues pour assembler des données lues à partir de la pluralité de mémoires tampons dans les trames SONET respectives, et pour fournir ensuite les trames SONET à la partie de multiplexage par répartition dans le temps.

9. Dispositif de transmission selon la revendication 2, dans lequel la partie de mémoire tampon de sortie comprend des parties d'assemblage de trames SONET simples qui sont conçues pour assembler des données lues à partir de la pluralité de tampons dans les trames SONET respectives et pour fournir ensuite les trames SONET à la partie de multiplexage par répartition dans le temps.

10. Dispositif de transmission selon la revendication 2, comprenant en outre une partie de conversion 8B/10B (84 ; 180) qui est conçue pour convertir des données multiplexées provenant de la partie de multiplexage par répartition dans le temps en des données comportant un format de conversion 8B/10B pour une transmission.

11. Dispositif de transmission selon la revendication 2, comprenant en outre des parties d'ajout d'étiquettes/d'effacement MAC (1641; 164n) qui sont conçues pour effacer des adresses MAC de paquets IP et ajouter des étiquettes correspondant à la pluralité de ports d'entrée aux paquets IP qui sont les entrées de données vers la partie de ports d'entrée.

12. Dispositif de transmission selon la revendication 2, comprenant en outre :
des parties de détection d'étiquettes (1021 à 102k) qui sont conçues pour détecter des étiquettes et ajouter à une pluralité d'éléments de données obtenus en soumettant un signal reçu à un démultiplexage dans une seconde partie de multiplexage par répartition dans le temps (94),
une pluralité de secondes mémoires tampons (1001 à 100k) qui sont conçues pour mémoriser une pluralité d'éléments de données,
une seconde partie de commutation (106) qui est conçue pour établir les connexions entre la pluralité de secondes mémoires tampons et une pluralité de ports de sortie (1101 à 110n), et
un second circuit de commande de sélection (104) qui est conçu la seconde partie de commutation de sorte que la pluralité d'éléments de données peut être fournie en sortie par l'intermédiaire de ports de sortie dépendant des étiquettes détectées.
